# EUROPEAN PATENT SPECIFICATION

(11) **EP 1 131 910 B1**
(45) Date of publication and mention of the grant of the patent: **02.09.2009**
(21) Application number: 99960467.1
(22) Date of filing: 17.11.1999
(51) Int. Cl.: H04J 14/02, H04J 14/08, H04J 13/00, H04J 14/00, H04J 3/24, G02B 6/293, G02B 6/28, G02B 6/26, H04B 7/216, H04B 10/28

(54) **CODE-BASED OPTICAL NETWORKS, METHODS, AND APPARATUS**
KODEGESCHÜTZTE OPTISCHE NETZWERKE, VERFAHREN UND VORRICHTUNGEN
RESEAUX OPTIQUES FONDES SUR LE CODE, APPAREIL ET PROCEDES CORRESPONDANTS

(30) Priority: 17.11.1998 US 108701 P; 17.11.1998 US 108700 P
(43) Date of publication of application: 12.09.2001
(73) Proprietor: Templex Technology Inc., Eugene, OR 97403 (US)
(72) Inventor: GRUNNET-JEPSEN, Anders, Eugene, OR 97408 (US); JOHNSON, Alan, E., Eugene, OR 97404 (US); MANILOFF, Eric, S., Eugene, OR 97404 (US); MOSSBERG, Thomas, W., Eugene, OR 97404 (US); MUNROE, Michael, J., Eugene, OR 97403 (US); SWEETSER, John, N., Eugene, OR 97405 (US)
(74) Representative: Barton, Matthew Thomas
(86) International application number: PCT/US1999/027350
(87) International publication number: WO 2000/030282

(56) References cited:
- US-A- 4 779 266
- US-A- 4 779 266
- US-A- 5 467 212
- US-A- 5 712 932
- US-A- 5 742 416
- US-A- 5 760 941
- US-A- 5 784 506
- US-A- 5 790 287
- US-A- 5 790 287
- US-A- 5 793 907
- US-A- 5 805 583
- US-A- 5 841 776
- US-A- 5 841 776
- US-A- 5 886 539

## Description

### Field of the Invention

The invention pertains to optical communication systems.

### Background of the Invention

Optical fibers provide communication bandwidths as large as tens of Terahertz (THz). Such large bandwidths are too large to be fully used by single-channel communication systems that transmit data by amplitude modulation of a narrow-bandwidth optical carrier such as by directly modulating a distributed feedback laser. Factors limiting the bandwidth occupied by simple amplitude-modulated systems include bandwidth limits on available electronic and optical components such as optical modulators and detectors, as well as fiber dispersion.

In order to more fully use the available bandwidth of an optical fiber, multiplexing techniques have been developed that permit several communication channels to use the same optical fiber. The total fiber bandwidth used by these channels can be as large as the sum of the individual channel bandwidths. Conventional methods for multiplexing in optical communication systems include time-division multiplexing (TDM), wavelength-division multiplexing (WDM), and optical-code-division multiple access (OCDMA). These optical multiplexing methods are typically used in long haul, point-to-point communication and in short haul, ring-topology communication systems. Each of these methods has benefits as well as drawbacks associated with it.

A passive optical network (PON) capable of transmitting and receiving data from a large number of users simultaneously reduces cost and increases system reliability. A PON includes passive optical components that route optically encoded data streams to and from designated users or network nodes. Communication systems based on the Synchronous Optical Network ("SONET") are not PONs since each user or node in a SONET system must have active equipment to detect and demultiplex the data stream to recover data, and then retransmit data to the next user or node.

WDM systems are PONs, but each user of a WDM system is assigned a specific wavelength, so that WDM-based PONs are expensive and are not readily reconfigurable.

The use of OCDMA in a PON is advantageous in that data encoded onto a single transmitter can be distributed among many users because data is distinguished by a complex temporal code, and not wavelength as in WDM systems. Furthermore, CDMA coding has the advantage that the number of users is flexible, dependent on system usage. Also, most OCDMA implementations inherently offer hardware encryption by making channel decoding difficult without knowledge of the OCDMA encoding scheme. However, flexible tree-architecture PONs based on OCDMA typically require expensive equipment that must be located at each network node or an end-user location. Therefore, improved systems, methods, and architectures are needed for practical PON OCDMA systems.
The document US5841776 shows a method and an apparatus for implementation of a code division multiple access encoding scheme in a fiber optic network.

### Brief Description of the Drawings

FIG. 1 is a schematic block diagram of a communication system that includes a passive optical network (PON).
FIG. 2 is a schematic block diagram of the central station of FIG. 1.
FIG. 3 is a schematic block diagram of a representative level-A multiplexing (mux) station.
FIG. 4 is a schematic diagram of a level-A address encoder.
FIG. 5 is a schematic diagram of a level-A address decoder.
FIG. 6 is a schematic diagram of a representative level-B mux station.
FIG. 7 is a schematic diagram of a level-B address decoder.
FIG. 8 is a schematic diagram of a level-B address encoder.
FIG. 9 is a schematic diagram of a representative user station of the communication system of FIG. 1.
FIG. 10 is a schematic diagram of a data-transmission system using 3-chip supercodes and 3-chip subcodes.

### Detailed Description

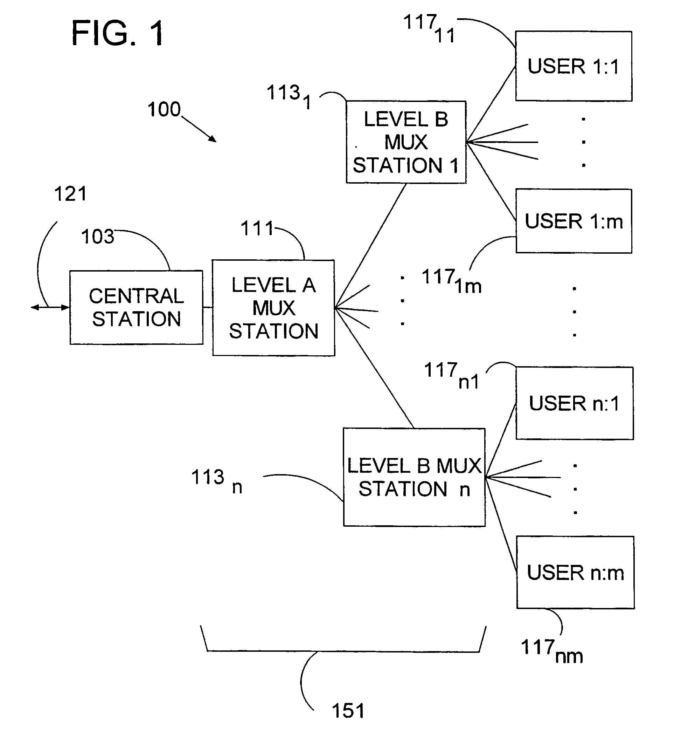

FIG. 1 illustrates an optical communication system 100 comprising a central station 103 that distributes optically transmitted data (telephony, internet, video, etc.) to a number of geographically separated users 117₁₁, ..., 117ₙₘ that communicate with the central station 103 via a passive optical network 151. In addition, the central station 103 collects data from the user stations 117₁₁, ..., 117ₙₘ for remote transmission via an optical communication link 121. For convenience in describing the communication system 100 and other communication systems and apparatus, a "downstream direction" is defined as a data-propagation direction from a central station to a user. An "upstream direction" is a data-propagation direction from a user to a central station.

In the communication system 100, multiple data streams are multiplexed and demultiplexed by using optical-code-division multiple access (OCDMA). As shown in FIG. 1, the communication system 100 has a tree architecture with a level-A mux station 111 and level-B mux stations 113₁, ..., 113ₙ. While FIG. 1 shows the level-A mux station 111 as a single branch from the central station 103, the central station 103 can communicate with multiple level-A mux stations.

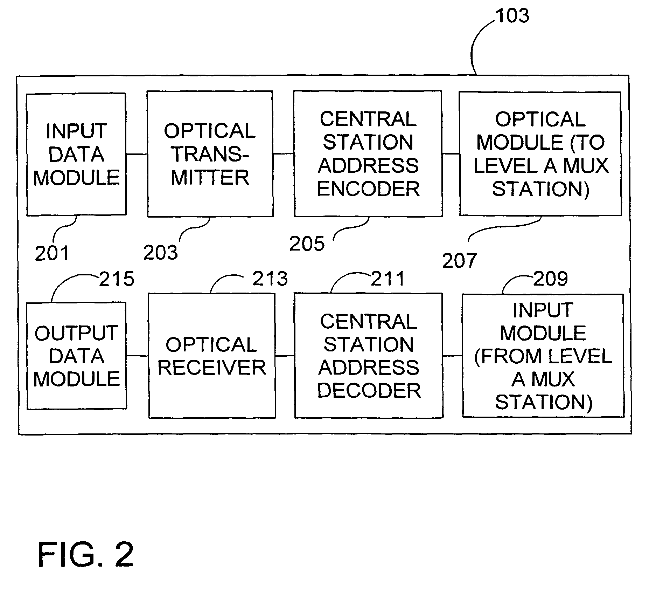

FIG. 2 is a schematic diagram of the central station 103. The central station 103 comprises an input data module 201 that receives data transmitted to or produced at the central station 103. As shown in FIG. 1, the central station 103 receives data from an external data link 1 21 or from the level-A mux station 111. Returning to FIG. 2, the input-data module 201 delivers an electrical data signal to an optical transmitter 203 that includes an optical emitter such as a distributed feedback laser. The laser is modulated in response to the electrical data signal so as to produce an optical data signal. Alternatively, an emitter can be provided that emits a continuous optical signal or a periodic series of optical pulses that are modulated with an electro-optic, acousto-optic, electro-absorptive, or other modulator. The modulation can be amplitude-modulation or phase-modulation or a combination thereof.

A central station address encoder 205 receives the optical data signal from the optical transmitter 203 and encodes the modulated optical signal with an optical code such as a composite code serving as an address for a selected user. In an alternative embodiment, the central station address encoder 205 can include encoders for every user (a total of *nxm* encoders), or a smaller number of programmable encoders depending on system requirements, e.g., the aggregate downstream bandwidth and the number of users to be simultaneously addressed.

Composite codes are described in a U.S. Patent Application entitled CODES, METHODS, AND APPARATUS FOR OPTICAL ENCODING AND DECODING, co-filed with the present application and incorporated herein by reference. Representative encoders and decoders using fiber Bragg gratings are described in U.S. Patent App. No. 09/354,851, TIME-WAVELENGTH MULTIPLE ACCESS COMMUNICATION SYSTEM that is incorporated herein by reference.

The composite codes are made of one or more code sets, each code set corresponding to the number of mux levels. In the two-node (two mux levels) network of FIG. 1 , the central station address encoder 205 applies composite codes having two levels A, B corresponding to level-A codes and level-B codes. If a third group of nodes were provided (i.e., if a level-C mux station were placed between the level-B mux stations 113₁, ..., 113ₙ and user stations 117₁₁, .. , 117ₙₘ to provide a third level of coding), then the central station address encoder 205 could apply the level-C codes. In such a case, the composite codes would include A-level, B-level, and C-level codes. Composite-code encoders can be configured in a variety of ways as described in the references cited above.

Returning further to FIG. 2, an output module 207 of the central station 103 delivers combined optically coded (composite-coded) data signals from the encoders of the central station address encoder 205, and delivers a coded optical signal to the level-A mux station 111. The coded signal delivered to the level-A mux station 111 is encoded with level-A and level-B codes that designate a user station to which data is to be delivered.

The central station 103 further comprises an input module 209 that receives optical signals from the level-A mux station 111 and delivers optical signals to a central station address decoder 211 that decodes the level A and level B codes with which the optical signals are encoded. After the optical signals are thus decoded, an optical receiver 213 produces an uncoded electrical signal corresponding to the decoded optical signal, and an optical transmitter ("output data module") 215 transmits a corresponding optical signal on the communication link 121.

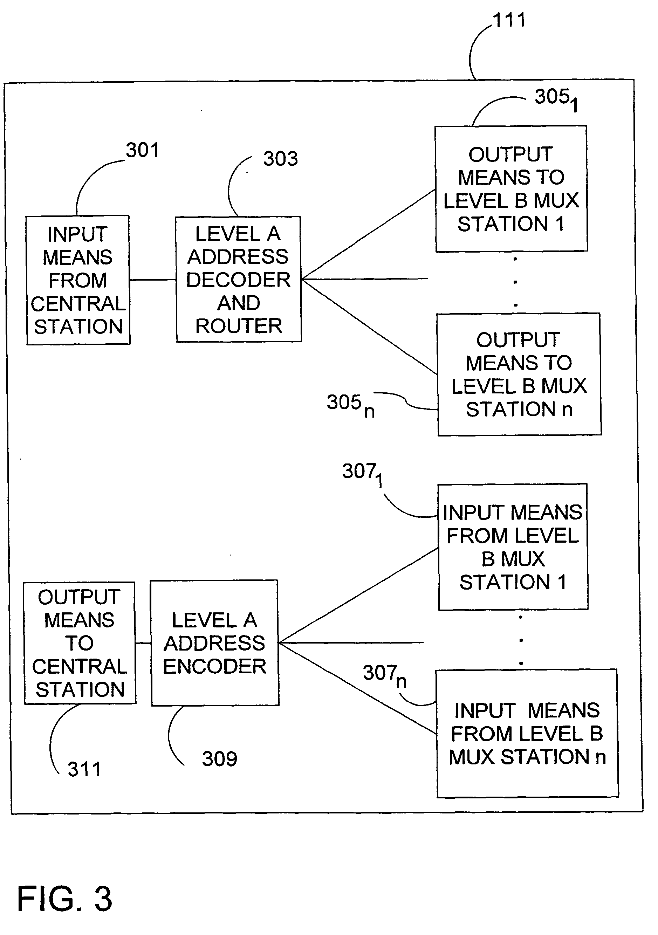

FIG. 3 is a schematic diagram of the level-A mux station 111. An input module ("input means") 301 of the level-A mux station 111 accepts optical, composite-coded data signals from the central station 103. The input module 301 directs the optical data signals to a level-A address decoder/router 303. Output modules ("output means") 305₁, ..., 305ₙ receive optical data signals from the level-A address decoder/router 303, split the received optical data signal into n optical data signals, and transmit these signals to respective level-B mux stations 113₁, ..., 113n.

The level-A mux station 111 also includes input modules ("input means") 307₁, ..., 307ₙ that receive optical data signals from respective level-B mux stations 113₁, ..., 113ₙ. A level-A address encoder 309 applies a level-A code to the received optical signals and directs the encoded optical signals to an output module ("output means") 311 for delivery to the central station 103.

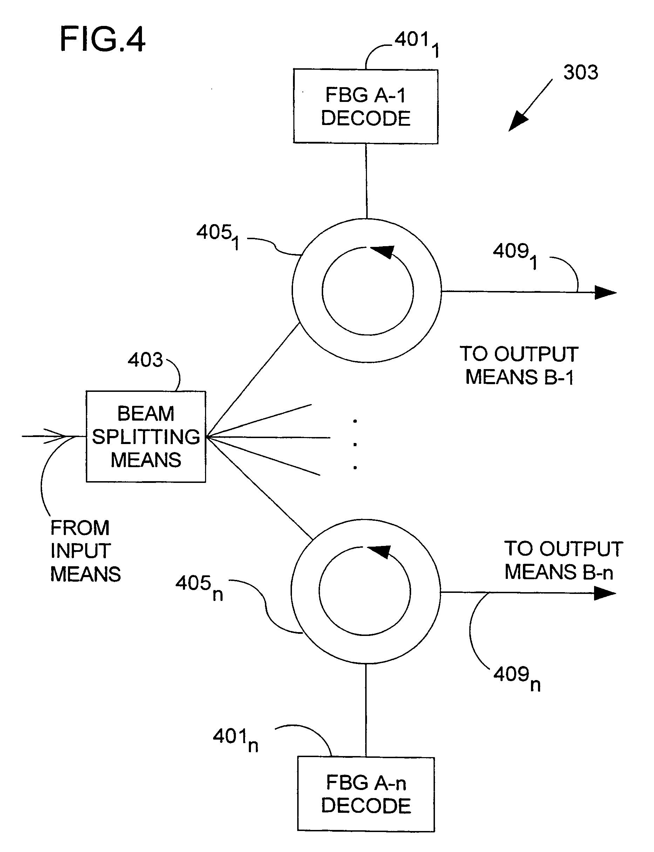

FIG. 4 is a schematic diagram of the level-A address decoder/router 303. A beam splitter ("beam splitting means") 403 or a fiber directional coupler receives optical signals from the input module 303 and directs portions of the optical signals to optical circulators 405₁, ..., 405ₙ that, in turn, direct respective portions of the optical signals to corresponding complex fiber Bragg gratings 401ᵢ, ..., 401ₙ that decode level-B codes. Decoded optical signals are delivered to corresponding outputs 409₁, ..., 409ₙ that deliver a respective decoded optical signal to a corresponding level-B mux station. The optical signals for the respective level-B mux stations 113₁, ..., 113ₙ can be broadcast, and data not intended for delivery to a particular level-B mux station (and ultimately to a selected user station) is not properly decoded at the decoder/router 303. For data decoded with an unmatched decoder, the optical signal is typically a noise-like, low-power signal.

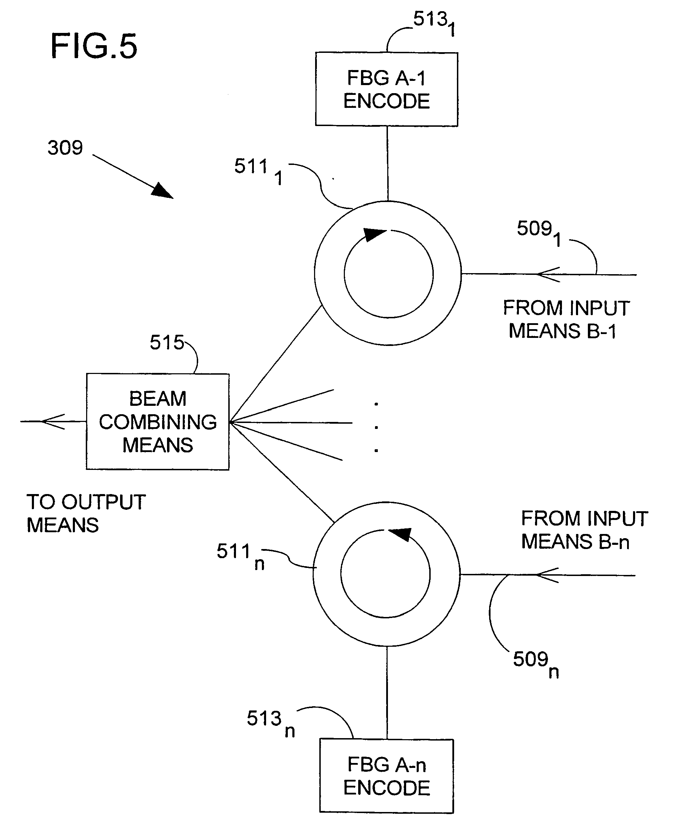

FIG. 5 is a schematic diagram of the level-A address encoder 309. Level-B coded optical signals are received at corresponding inputs 509₁, ..., 509ₙ and delivered to respective optical circulators 511₁, ..., 511ₙ and respective fiber Bragg gratings 513₁, ..., 513ₙ. After encoding with level-A codes by the fiber Bragg gratings 513₁, ..., 513ₙ, encoded optical signals are combined by a beam combiner ("beam combining means") 515 for delivery to the output module 311 and the central station 103.

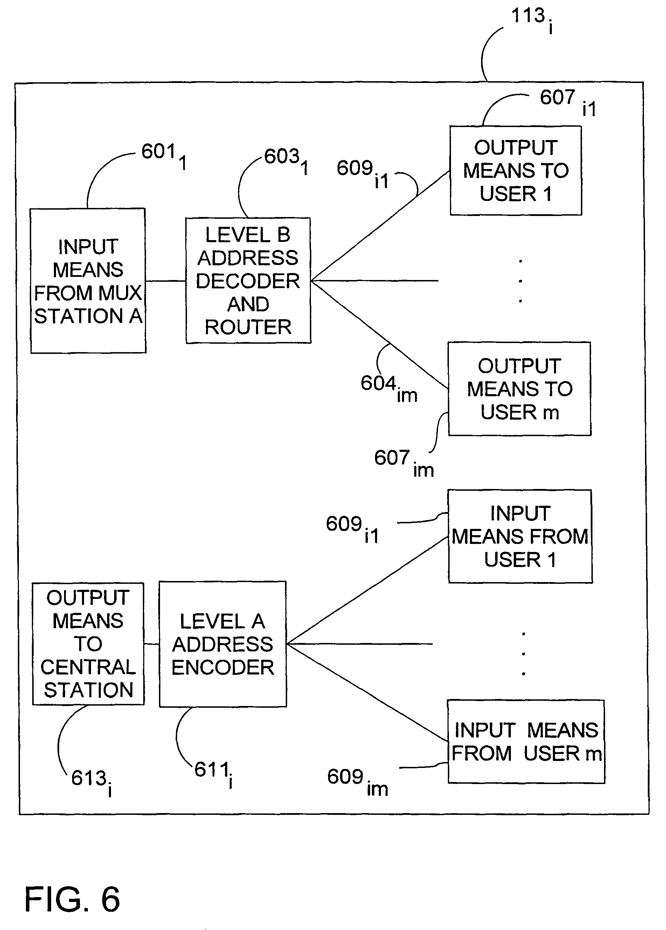

FIG. 6 is a schematic diagram of a representative level-B mux station 113ᵢ. The level-B mux station 113ᵢ includes an input module ("input means") 601ᵢ that accepts an optically coded data signal from the level-A mux station 111. A level-B address decoder/router 603ᵢ receives the optical data signal and splits the optical data signal into *m* corresponding optical data signals 604ᵢ₁, ..., 604ᵢₘ, corresponding to the m user stations 117ᵢ₁, ..., 117ᵢₘ. Output modules 607ᵢ₁, ..., 607ᵢₘ transmit the split optical data signals 604ᵢ₁, ..., 604ᵢₘ.

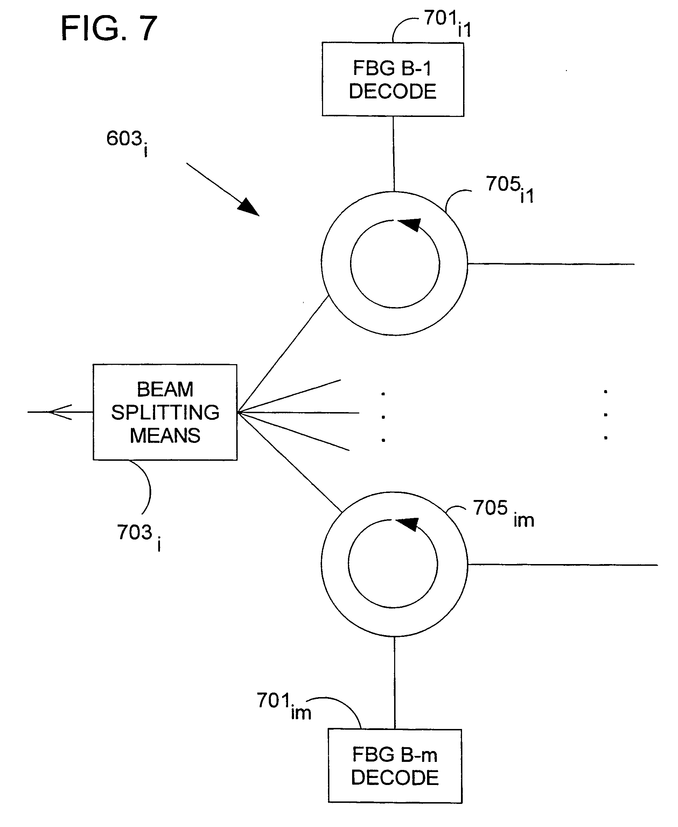

FIG. 7 is a schematic diagram of the representative level-B address decoder/router 603ᵢ. A beam splitter ("beam splitting means") 703ᵢ or a fiber directional coupler receives an optical signal from the level-A mux station 111 and directs respective portions of the optical signal to optical circulators 705ᵢ₁, ..., 705ᵢₘ that, in turn, direct the respective portions to corresponding fiber Bragg gratings 701ᵢ₁, ..., 701ᵢₘ that decode level-B codes. The optical signal from the level-A mux station 111 can be broadcast to the respective level-B mux station because data not intended for delivery to a particular level-B mux station (and ultimately to a selected user station) is not properly decoded in the decoder/router 603ᵢ. For data decoded with an unmatched decoder, the optical signal is typically a noise-like, low-power signal and data is not readily recovered from such signals.

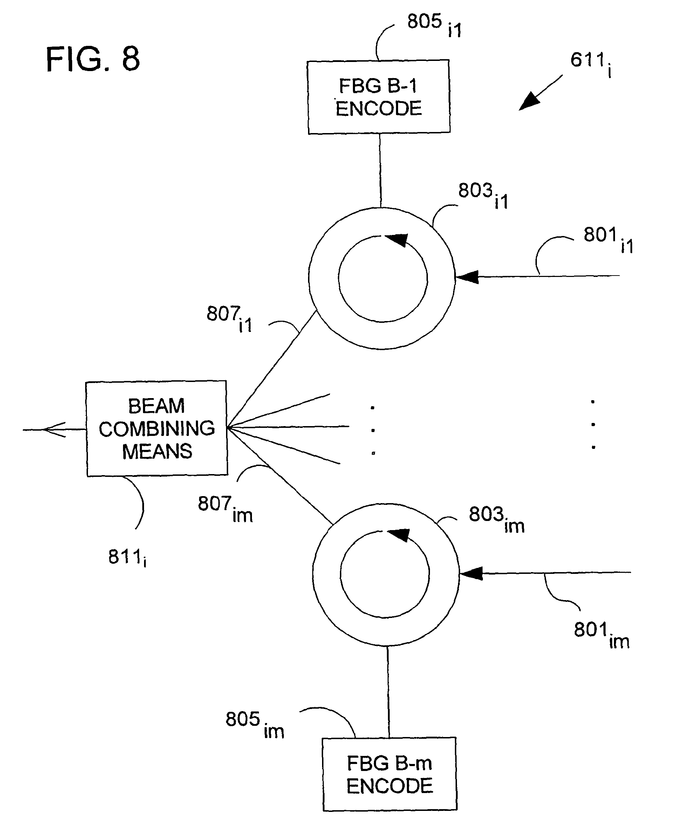

FIG. 8 is a schematic diagram of the level-B encoder 611ᵢ. Optical signals are received from user stations 117ᵢ₁, ..., 117ᵢₘ at respective inputs 801ᵢ₁, ..., 801ᵢₘ and delivered to respective optical circulators 803ᵢ₁, ..., 803ᵢₘ and fiber Bragg gratings 805ᵢ₁, ..., 805ᵢₘ that encode level-B codes. Encoded optical signals propagate along fiber lengths 807ᵢ₁, ..., 807ᵢₘ to a beam combiner ("beam combining means") 811ᵢ, and the combined optical signal is delivered to the level-A mux station 111.

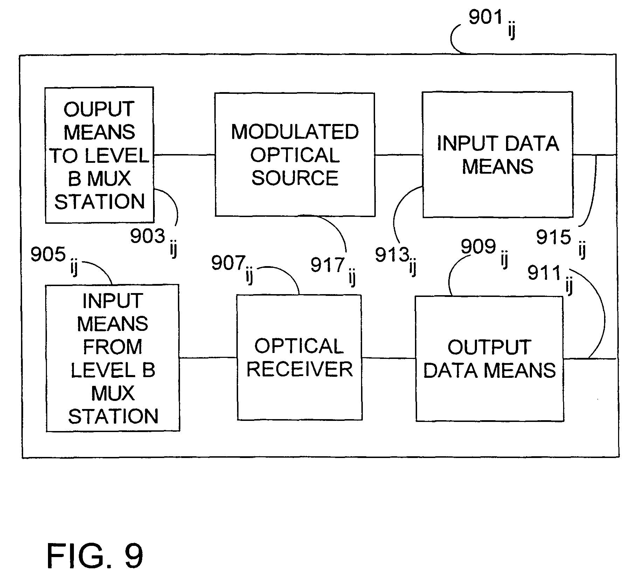

The user stations 117ᵢ₁, ..., 117ₙₘ include respective interface modules, such as a representative interface module 901ᵢⱼ shown in FIG. 9. The interface module 901ᵢⱼ comprises an output module ("output means") 903ᵢⱼ and an input module ("input means") 905ᵢⱼ that send data to and receive data from a corresponding level-B mux station 113ᵢ. The input module 905ᵢⱼ receives a decoded optical signal from the corresponding decoder of the level-B mux station 113ᵢ. An optical receiver 907ᵢⱼ converts the decoded optical signal into a corresponding electrical signal. If the decoded optical signal originated at the central station 103 and was encoded with the level-A and level-B codes associated with the selected user station 117ᵢⱼ, then the electrical signal includes a series of data pulses. If the level-A and level-B codes applied at the central station 103 have not been properly decoded, then the electrical signal is a noise-like signal that can include some electrical pulses similar to data pulses but having smaller magnitudes. The optical receiver 907ᵢⱼ can include circuitry for removing or attenuating these smaller pulses and the noise-like background by thresholding and/or digitization, producing an enhanced electrical data output signal. The data output module delivers the electrical data output signal to a module output 911ᵢⱼ.

For communication in an upstream direction, i.e., from a user station 117ᵢⱼ towards the central station 103, an input module 91 3ij receives data from a user input 915ᵢⱼ. The received data modulates an optical transmitter ("modulated optical source") 917ᵢⱼ and the output module 903ᵢⱼ transmits an uncoded optical signal to a level-B mux. The optical transmitter 917ᵢⱼ can include a laser diode that is directly modulated by the received data, or that is modulated by an electro-optic, acousto-optic, electro-absorptive, or other modulator. Corresponding level-A and level-B mux stations apply level-A and level-B codes to the uncoded optical signal, and the coded signal arrives at the central station 103 where it can be decoded for transmission by stripping the level-A and level-B codes that indicate the data source.

Returning to FIG. 1, the PON 151 includes coders (encoders and decoders, not shown) that apply and strip codes from optical data signals. These coders require no power, nor is an optical-to-electrical conversion needed in the PON 151. In some cases, partially encoded and decoded optical signals are broadcast, but data generally cannot be recovered from these broadcast optical signals unless decoded and encoded with matching codes. Hence, the PON 151 is "secure."

The embodiments described herein comprise encoders and decoders that include optical circulators and reflective complex fiber Bragg gratings. Other coding methods and apparatus can be used. Such methods and apparatus also apply selected linear spectral transforms to optical signals. Furthermore, other methods and apparatus, such as beam splitters or fiber couplers, can be used to separate counterpropagating optical data signals instead of optical circulators. Representative optical encoders and decoders include passive diffractive devices such as Bragg gratings and fiber Bragg gratings as described in, for example, U.S. Patent No. 5,812,318; U.S. Patent Application Nos. 09/1 15,331, SEGMENTED TASM GRATINGS, 09/120,959, SEGMENTED COMPLEX FIBER GRATING, and 09/354,851, TIME WAVELENGTH MULTIPLE ACCESS COMMUNICATION SYSTEM. These documents are incorporated herein by reference.

The communication system 100 of FIG. 1 can include optical amplifiers if necessary, based on system-design parameters such as fiber loss, desired signal-to-noise level, intended number of users, acceptable bit-error rate, and others. Dispersion compensation can be provided in the PON 151 and a wavelength-division-multiplexed (WDM) layer can be provided in addition to the code layer. In addition, embodiments are discussed with reference to optical signals that are electromagnetic fields of wavelength from about 300 nm to 0.1 mm. However, embodiments using longer or shorter wavelength electromagnetic fields are possible and electrical voltages carried by conductors such as wires can be used as well.

For convenience in describing embodiments, decoders were referred to as "stripping" a code from a signal. Decoding generally permits data recovery by a detector, and decoding need not restore a signal exactly to its pre-encoded form. In addition, a signal from which a code has been stripped can be referred to as a "decoded" signal. Finally, for clarity, encoders and decoders are referred to in the above description, but can be more generally referred to as "coders."

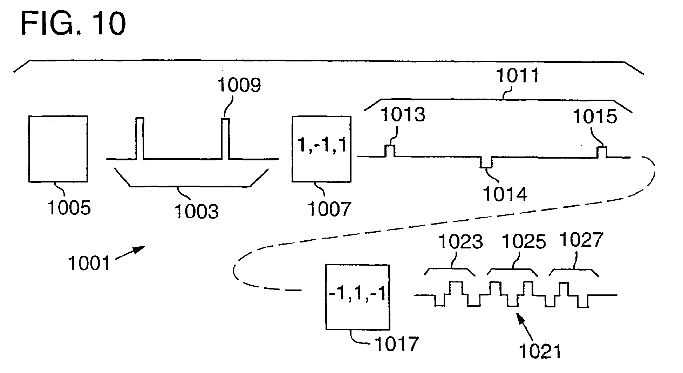

For convenience, composite codes that include two code levels and suitable for use in a passive optical network and in address encoders/decoders are described with reference to FIG. 10. FIG. 10 is a schematic of a data transmission system 1001 that produces a data signal 1003 from a data source 1005. As shown in FIG. 10, the data signal 1003 is represented as a binary, on-off modulation of an electromagnetic carrier such as an optical carrier. The on-off modulation is selected for convenience only, and other modulations can include phase, amplitude, intensity, and frequency modulation. In addition, non-binary modulation having more than two modulation levels can be used.

A supercode encoder 1007 receives the data signal 1003 and applies a predetermined code Rᵢ selected from a code set R to the data signal 1003. For purposes of illustration, a code Rᵢ = {1, -1, 1} is selected and applied to a representative bit 1009 of the data signal 1003. As specified by the code R, the encoder 1007 receives the bit 1009 and transforms the bit into a "supercoded" bit packet 1011. The supercoded bit packet 1011 includes super-coded bits ("superbits") 1013-1015 that are relatively delayed by a delay time *T*_{RC}, wherein *T*_{RC} is a supercode chip duration. In addition, the phase of the superbit 1014 is inverted, while the phases of the superbits 1013, 1015 are unchanged. The encoder 1007 applies the code Rᵢ to the entire data signal 1003 to produce a supercoded data signal that is a sum of superbits corresponding to all respective bits of the data signal 1003.

A subcode encoder 1017 receives the supercoded data signal and applies a code Sᵢ selected from a code set S. For purposes of illustration, a code Sᵢ = {-1, 1, -1} is selected. The code Sᵢ is applied to the supercoded bit packet 1011 to produce a combined subcoded and supercoded ("composite-coded") bit packet 1021 that includes subcoded bits 1023, 1025, 1027, corresponding to respective superbits 1013, 1014, 1015. The encoder 1017 encodes each of the supercoded bits 1013-1015 by relatively delaying portions by a delay time Tsc wherein Tsc is a subcode chip duration, and changing the phase of the supercoded bits 1013, 1015, to produce the corresponding subcoded bits 1023, 1025, 1027. The encoder 1017 applies the code Sᵢ to the supercoded data signal, producing a composite-coded data signal.

The encoders 1007, 1017 apply codes from respective sets R, S to the data signal 1003. If the sets R, S contain N_{R} and Ns codes, respectively, then N_{R} x N_{S} different encodings are available. For example, if sets R, S each include 5 codes, then 25 encodings are possible. Thus, the number of available encodings increases as the product of N_{R} and N_{S} increases so that large numbers of encodings are possible even with small code sets. In addition, the sets R, S can be subsets of a large code set and can include different or identical codes. In this way, a set of N codes can be used to produce N² different encodings.

FIG. 10 illustrates encoding, with two sets of codes (sets R, S), but additional code sets can be used to further increase the number of available encodings. Subcode bits 1013-1015 can be further encoded with a code set Q having N_{Q} codes, so that the number of available encodings is N_{R} x N_{S} x N_{Q}. Codes obtained by combining two or more code sets such as the code sets R, S are referred to herein as "composite codes." Composite codes using code sets R, S and code sets R, S, Q are suitable for networks having two and three levels of address encoding/decoding, respectively.

The codes Rᵢ, Sᵢ used above are selected as representative examples. More generally, codes include two or more "chips" that specify modulations to be applied to a signal. The chip modulations are applied to a signal at relative times differing by a chip duration *T*_{C}. Thus, a code and a chip duration specify an encoding of a data signal. A supercode is further specified by an interchip duration. A code R, having a total duration *T*_{R}, a number of chips N_{R}, and a chip duration *T*_{RC}, and a code S, having a total duration Ts, a number of chips Ns, and chip duration or interchip delay *T*_{SC}, are effectively orthogonal as decoded if *T*_{R} ≤ *T*_{SC}. A composite code can be produced from the code R (a subcode), and from the code S (a supercode). The composite code has a given duration equal to the duration of the supercode and has a number of chips equal to the product of the number of chips of the subcode and the supercode. The chip duration is equal to the subcode chip duration. In the composite code, the subcode is repeated a number of times equal to the number of chips in the supercode.

Code sets and chip durations of supercodes and subcodes (and sub-subcodes) are preferably selected so that a data signal encoded with a particular composite code is decoded only with a matching decoding composite code. Decoding with an unmatched composite code produces only a noise-like background or low amplitude "sidelobes" or "crosstalk."

Given temporal orthogonality between a supercode and the subcode (i.e., low-amplitude cross-correlation and noise-like background), composite code sets of sufficient orthogonality can be generated from a code set with a small number of chips if the codes of the code set are sufficiently orthogonal. A code in a composite code set is generated by using a selected code of the code set as a supercode and another selected code of the code set as a subcode. A composite code set comprises all combinations of supercodes and subcodes. For example, if a code set has *M* codes each containing Nₘ chips, then the composite code set contains *M* x *M* codes each having NₘxNₘ chips.

Having illustrated and demonstrated the principles of the invention, it should be apparent to those skilled in the art that the embodiments described can be modified in arrangement and detail without departing from such principles. We claim as the invention all that comes within the scope of these claims.

## Claims

1. A communication system, comprising:
a central station (103) that receives data signals (121) and produces corresponding CDMA coded optical signals, the system including means (111, 113) for receiving and decoding the CDMA coded optical signal, **characterized in that** said means for receiving and decoding includes a first level mux station (111), a plurality of second level mux stations (113) and a plurality of user stations (117), said central station (103) being operable to produce said corresponding CDMA coded optical signals as signals each coded with a composite code including a first CDMA code the chips of which have themselves been coded with a second CDMA code to produce composite CDMA coded optical signals; and in which the second CDMA code identifies a respective said second level mux station (113) whilst the first CDMA code identifies a respective said user station (117), said first level mux station (111) receiving the composite CDMA coded optical signals and directing to respective said second level mux stations (113) first level decoded optical signals, in dependence on the second CDMA codes in the respective composite coded optical signals, each second level mux station (113) being configured to direct to respective said user stations (117) decoded optical signals, in dependence on the first CDMA codes in the respective first level decoded optical signals, and wherein said first and second level mux stations (111, 113) are passive optical devices that require no power.

2. The communication system of claim 1, wherein the first-level mux station (111) includes a reconfigurable encoder for applying a selected composite code.

3. The communication system of claim 1, wherein the central station (103) applies a composite code selected from a set of composite codes.

4. The communication system of claim 3, wherein said composite codes are generated from a set of first-level codes and a set of second level codes.

5. A communication system according to claim 1 wherein said central station (103) comprises:
a receiver (201) that receives a first optical data signal and produces a corresponding electrical data signal;
a transmitter (203) that produces a second optical data signal based on data defined by the electrical data signal; and
an encoder (205) that applies said composite code to the second optical data signal.

6. A communication system according to claim 1 wherein said first level mux station (111) comprises a beam splitter (403) and a plurality of decoding devices each comprising an optical circulator (405) with an associated fibre Bragg grating (401) each optical circulator being arranged to receive optical signals from the beam splitter and to direct these optical signals to the respective fibre Bragg grating (401), and to direct optical signals reflected by the respective fibre Bragg grating (401) to a respective said second level mux station (113).

7. A communication system according to claim 1 wherein each said second level mux station (113) comprises a beam splitter (703) and a plurality of coding devices, each comprising an optical circulator (603) with an associated fibre Bragg grating (701), each optical circulator being arranged to receive optical signals from the beam splitter and to direct these optical signals to the respective fibre Bragg grating (701), and to direct optical signals reflected by the respective fibre Bragg grating to a respective said user station (117).

8. A communication system according to claim 1 wherein each said second level mux station (113) comprises a plurality of passive optical encoding devices (701,705) each adapted to apply a respective first level code to optical signals from a respective said user station (117) and to pass the resulting first level coded signals on a common optical communication path (703) to said first level mux station (111), and wherein said first level mux station is adapted to apply a respective second level code to the optical signals from each said second level mux station (113) and to pass the resulting composite coded signals to said central station (103), the central station being adapted to decode the first and second level codes.

## Patentansprüche

1. Kommunikationssystem, das Folgendes umfasst:
eine Zentralstation (103), die Datensignale (121) empfängt und entsprechende CDMA-codierte optische Signale erzeugt, wobei das System Mittel (111, 113) umfasst, um die CDMA-codierten optischen Signale zu empfangen und zu decodieren, **dadurch gekennzeichnet, dass** das Mittel zum Empfangen und Decodieren eine Multiplexstation ersten Niveaus (111), eine Vielzahl von Multiplexstationen zweiten Niveaus (113) und eine Vielzahl von Benutzerstationen (117) umfasst, wobei die Zentralstation (103) so betrieben werden kann, dass sie die entsprechenden CDMA-codierten optischen Signale als Signale erzeugt, die jeweils mit einem Composit-Code codiert sind, der einen ersten CDMA-Code umfasst, dessen Chips selbst mit einem zweiten CDMA-Code codiert wurden, um Composit-CDMA-codierte optische Signale zu erzeugen; und wobei der zweite CDMA-Code eine entsprechende Multiplexstation zweiten Niveaus (113) identifiziert, während der erste CDMA-Code eine entsprechende Benutzerstation (117) identifiziert, wobei die Multiplexstation ersten Niveaus (111) die Composit-CDMA-codierten optischen Signale empfängt und zu den entsprechenden Multiplexstationen zweiten Niveaus (113) auf erstem Niveau decodierte optische Signale leitet, und zwar in Abhängigkeit von den zweiten CDMA-Codes in den entsprechenden Composit-codierten optischen Signalen, wobei jede Multiplexstation zweiten Niveaus (113) so konfiguriert ist, dass sie zu den entsprechenden Benutzerstationen (117) decodierte optische Signale leitet, und zwar in Abhängigkeit von den ersten CDMA-Codes in den entsprechenden auf erstem Niveau decodierten optischen Signalen, und wobei die Multiplexstationen ersten und zweiten Niveaus (111, 113) passive optische Vorrichtungen sind, die keinen Strom erfordern.

2. Kommunikationssystem nach Anspruch 1, wobei die Multiplexstation ersten Niveaus (111) einen rekonfigurierbaren Codierer umfasst, um einen ausgewählten Composit-Code anzuwenden.

3. Kommunikationssystem nach Anspruch 1, wobei die Zentralstation (103) einen Composit-Code anwendet, der aus einen Satz von Composit-Codes ausgewählt wird.

4. Kommunikationssystem nach Anspruch 3, wobei die Composit-Codes aus einem Satz von Codes ersten Niveaus und einem Satz von Codes zweiten Niveaus erzeugt werden.

5. Kommunikationssystem nach Anspruch 1, wobei die Zentralstation (103) Folgendes umfasst:
einen Empfänger (201), der ein erstes optisches Datensignal empfängt und ein entsprechendes elektrisches Datensignal erzeugt;
einen Sender (203), der ein zweites optisches Datensignal basierend auf Daten, die von dem elektrischen Datensignal definiert werden, erzeugt; und
einen Codierer (205), der den Composit-Code auf das zweite optische Datensignal anwendet.

6. Kommunikationssystem nach Anspruch 1, wobei die Multiplexstation ersten Niveaus (111) einen Strahlenteiler (403) und eine Vielzahl von Decodiervorrichtungen umfasst, die jeweils einen optischen Zirkulator (405) mit einem zugehörigen Faser-Bragg-Gitter (401) umfassen, wobei jeder optische Zirkulator so ausgelegt ist, dass er optische Signale von dem Strahlenteiler empfängt und diese optischen Signale zu dem entsprechenden Faser-Bragg-Gitter (401) leitet und optische Signale, die von dem entsprechenden Faser-Bragg-Gitter (401) reflektiert werden, zu einer entsprechenden Multiplexstation zweiten Niveaus (113) leitet.

7. Kommunikationssystem nach Anspruch 1, wobei jede Multiplexstation zweiten Niveaus (113) einen Strahlenteiler (703) und eine Vielzahl von Codiervorrichtungen umfasst, von denen jede einen optischen Zirkulator (603) mit einem zugehörigen Faser-Bragg-Gitter (701) umfasst, wobei jeder optische Zirkulator so ausgelegt ist, dass er optische Signale von dem Strahlenteiler empfängt und diese optischen Signale zu dem entsprechenden Faser-Bragg-Gitter (701) leitet und optische Signale, die von dem entsprechenden Faser-Bragg-Gitter reflektiert werden, zu einer entsprechenden Benutzerstation (117) leitet.

8. Kommunikationssystem nach Anspruch 1, wobei jede Multiplexstation zweiten Niveaus (113) eine Vielzahl von passiven optischen Codiervorrichtungen (701, 705) umfasst, von denen jede dafür ausgelegt ist, einen entsprechenden Code ersten Niveaus auf optische Signale von einer entsprechenden Benutzerstation (117) anzuwenden und die resultierenden auf erstem Niveau codierten Signale auf einem gemeinsamen optischen Kommunikationspfad (703) zu der Multiplexstation ersten Niveaus (111) zu leiten, und wobei die Multiplexstation ersten Niveaus dafür ausgelegt ist, einen entsprechenden Code zweiten Niveaus auf die optischen Signale von jeder Multiplexstation zweiten Niveaus (113) anzuwenden und die resultierenden compositcodierten Signale zu der Zentralstation (103) zu leiten, wobei die Zentralstation dafür ausgelegt ist, die Codes ersten und zweiten Niveaus zu decodieren.

## Revendications

1. Système de communication, comprenant :
une station centrale (103) qui reçoit des signaux de données (121) et produit des signaux optiques codés CDMA correspondants, le système comprenant un moyen (111, 113) de réception et de décodage du signal optique codé CDMA, **caractérisé en ce que** ledit moyen de réception et de décodage comprend une station de multiplexage de premier niveau (111), une pluralité de stations de multiplexage de deuxième niveau (113) et une pluralité de stations d'utilisateur (117), ladite station centrale (103) étant utilisable pour produire lesdits signaux optiques codés CDMA correspondants en tant que signaux étant chacun codé avec un code composite comprenant un premier code CDMA dont les puces ont elles-mêmes été codées avec un deuxième code CDMA de façon à produire des signaux optiques codés CDMA composites, et où le deuxième code CDMA identifie une dite station de multiplexage de deuxième niveau respective (113) tandis que le premier code CDMA identifie une dite station d'utilisateur respective (117), ladite station de multiplexage de premier niveau (111) recevant les signaux optiques codés CDMA composites et orientant vers lesdites stations de multiplexage de deuxième niveau respectives (113) les signaux optiques décodés de premier niveau, en fonction des deuxièmes codes CDMA dans les signaux optiques codés composites respectifs, chaque station de multiplexage de deuxième niveau (113) étant configurée de façon à orienter vers lesdites stations d'utilisateur respectives (117) les signaux optiques décodés, en fonction des premiers codes CDMA dans les signaux optiques décodés de premier niveau respectifs, et où lesdites stations de multiplexage de premier et de deuxième niveaux (111, 113) sont des dispositifs optiques passifs qui n'exigent aucune alimentation électrique.

2. Système de communication selon la revendication 1, où la station de multiplexage de premier niveau (111) comprend un codeur reconfigurable destiné à appliquer un code composite sélectionné.

3. Système de communication selon la revendication 1, où la station centrale (103) applique un code composite sélectionné dans un ensemble de codes composites.

4. Système de communication selon la revendication 3, où lesdits codes composites sont générés à partir d'un ensemble de codes de premier niveau et d'un ensemble de codes de deuxième niveau.

5. Système de communication selon la revendication 1 où ladite station centrale (103) comprend :
un récepteur (201) qui reçoit un premier signal de données optique et produit un signal de données électrique correspondant,
un émetteur (203) qui produit un deuxième signal de données optique basé sur des données définies par le signal de données électrique, et
un codeur (205) qui applique ledit code composite au deuxième signal de données optique.

6. Système de communication selon la revendication 1 où ladite station de multiplexage de premier niveau (111) comprend un séparateur de faisceau (403) et une pluralité de dispositifs de décodage, chacun d'eux comprenant un circulateur optique (405) avec un réseau de Bragg à fibres associé (401), chaque circulateur optique étant agencé de façon à recevoir des signaux optiques du séparateur de faisceau et à orienter ces signaux optiques vers le réseau de Bragg à fibres respectif (401) et à orienter les signaux optiques réfléchis par le réseau de Bragg à fibres respectif (401) vers ladite station de multiplexage de deuxième niveau respective (113).

7. Système de communication selon la revendication 1 où chacune desdites stations de multiplexage de deuxième niveau (113) comprend un séparateur de faisceau (703) et une pluralité de dispositifs de codage, chacun d'eux comprenant un circulateur optique (603) avec un réseau de Bragg à fibres associé (701), chaque circulateur optique étant agencé de façon à recevoir des signaux optiques du séparateur de faisceau, à orienter ces signaux optiques vers le réseau de Bragg à fibres respectif (701) et à orienter les signaux optiques réfléchis par le réseau de Bragg à fibres respectif vers une dite station d'utilisateur respective (117).

8. Système de communication selon la revendication 1 où chacune desdites stations de multiplexage de deuxième niveau (113) comprend une pluralité de dispositifs de codage optique passifs (701, 705), chacun d'eux étant adapté de façon à appliquer un code de premier niveau respectif à des signaux optiques provenant d'une dite station d'utilisateur respective (117) et à transmettre les signaux codés de premier niveau résultants sur un trajet de communication optique commun (703) vers ladite station de multiplexage de premier niveau (111), et où ladite station de multiplexage de premier niveau est adaptée de façon à appliquer un code de deuxième niveau respectif aux signaux optiques provenant de chacune desdites stations de multiplexage de deuxième niveau (113) et à transmettre les signaux codés composites résultants à ladite station centrale (103), la station centrale étant adaptée de façon à décoder les codes de premier et de deuxième niveaux.
